(19)

Europäisches
Patentamt
European
Patent Office
Office européen
des brevets

(11) **EP 1 925 841 B1**

(12) **EUROPEAN PATENT SPECIFICATION**

(45) Date of publication and mention
of the grant of the patent:
**10.09.2008 Bulletin 2008/37**

(51) Int Cl.:
*F16D 55/226* (2006.01)    *F16D 65/21* (2006.01)
*B60T 13/74* (2006.01)

(21) Application number: **06024547.9**

(22) Date of filing: **27.11.2006**

(54) **Disc brake and method for sensing forces in such a disc brake**

Scheibenbremse und Verfahren zur Erfassung der Kräfte in einer solchen Scheibenbremse

Frein à disque et système de détection de forces dans un tel frein à disque

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**28.05.2008 Bulletin 2008/22**

(73) Proprietor: **Haldex Brake Products AB
261 24 Landskrona (SE)**

(72) Inventor: **Severinsson, Lars
310 21 Hishult (SE)**

(74) Representative: **Hruschka, Jürgen et al
Habermann, Hruschka & Schnabel,
Patentanwälte,
Montgelasstrasse 2
81679 München (DE)**

(56) References cited:
WO-A-03/036121        WO-A-20/05028904
WO-A-20/05028905      DE-A1-8102005 030
61
US-A1- 2004 187 591

**Description**

The present invention relates to disc brakes with self-servo effects, i.e. to disc brakes which embody a self-energizing mechanism. Moreover, this invention relates to a method of sensing forces which are present in such types of disc brakes.

It is well known in the art that a self-energizing effect for a disc brake on a vehicle may be obtained by applying a brake pad against a rotating brake disc, whereas the brake pad is tangentially movable in relation to the brake disc over inclined ramp means or the like.

The basic problems with such designs have been in former times the relatively poor controllability of the self-energizing system. Modern electronics and sensors nowadays provide a better controllability, which facilitates the use of electric motors as actuators.

A disc brake with a self-servo effect as defined above is exemplarily disclosed in the document WO 03/071150 of the applicant. The disc brake described therein uses a ramp-roller mechanism for the self-energizing effect. A ramp plate in connection with a brake pad to be engaged with the brake disc is supported on a ramp bridge via rollers in a sliding or rolling fashion, in that the rollers are moveable in ramps in surfaces facing each other of the ramp plate and the ramp bridge. The ramp bridge being supported against the caliper. Such an arrangement leads to the effect that a movement of the ramp plate in the tangential direction of the brake disc, which will result from the engagement of the brake pad and the brake disc, will cause the ramp plate to move towards or away from the brake disc.

Other embodiments of disc brakes which embody a self-servo mechanism with wedge arrangements are e.g. known from DE 102 26 035 A1, DE 100 56 451 A1, DE 100 46 177 A1 or DE 100 37 055 A1.

Document WO 2005/028905 also of the applicant discloses a disc brake with self-servo effect in which axial force sensing means indicative of the axial brake force are provided at some place in the brake force transmitting chain between a ramp bridge and a rear pad. Axial force sensing means, however, are disadvantageous in that the friction force cannot be determined from the axial brake force without having to consider the influence of a varying coefficient of friction.

In order to enable the use of such self-servo disc brakes in vehicles, it is crucial that the electromechanical brakes comprise a control system which ensures that the different brakes, in particular of one axle, are braking with the same braking force, so as to avoid lateral dragging of the vehicle or so as to avoid braking with a braking force which is increased or reduced as compared to the braking force as intended by the driver. Furthermore, it is vital that the self-servo brake is not blocking.

Differences in the braking performance often may result from changes of the coefficient of friction in the brake pad and brake disc interaction during braking. Such changes inter alia can be dependent from the temperature currently present at the brake disc or from the surface characteristics of the latter and the friction lining of the brake pad.

The dependency of the brake performance from the coefficient of friction is particularly crucial for self-servo brakes due to the high self-energizing effect between the input force and the actually resulting braking force and thus friction force.

In principle, the braking torque in such disc brakes could be easily controlled by adjusting the actuator force and thereby the clamp force once the friction force is known at all times during braking.

In some prior art designs, the friction force is measured by sensors which are arranged between the friction lining and the brake pad backplate. Such measurements, however, are highly sensitive to many disturbances, such as e.g. vertical movements of the brake when the vehicle is moving on uneven grounds. Disturbances subsequently require filtering of the very noisy signals from the friction force sensors, which render the system complicated and slow, which contradicts an efficient feedback controllability of the system required in particular for self-servo brakes.

Based on these considerations, the object of the invention is to enable an electromechanical disc brake with enhanced controllability and with improved dynamic performance of its controllability.

The above object is solved by a disc brake according to claim 1 and by a method for determining the friction force according to claim 13.

According to the invention a disc brake with self-servo effect with a caliper overlapping a brake disc is comprising a pressure element provided with a brake pad for engagement with the brake disc, a support element, at least one bearing element, by means of which the pressure element is supported against the support element, and means for adjusting a control force acting on the pressure element substantially transverse to the brake disc, whereas the arrangement is being such that a movement of the pressure element in the tangential direction of the brake disc will cause it to move towards or away from the brake disc, and further comprising means for determining the contact forces both in axial and tangential direction of the at least one bearing element in the support element, and means for determining the friction force at the brake disc from said determined contact forces.

Irrespective of the actual design of the self-energizing arrangement and the actuation principle, the means for determining the contact forces provide a value from which the actual value of the friction force at the brake disc can be calculated and thus finally the braking torque can be controlled in that the means for adjusting the control force continuously adjust the control force by means of a given force-feedback system. The control force actually is the force which will be input into the pressure element.

In other words, the friction force can be indirectly determined by the contact forces applied by the at least one bearing element vis-à-vis the support element. This will enable a more dampened and more useful signal for the force-feedback control, since disturbances can be better excluded.

In a preferred embodiment of the disc brake according to the invention, the means for adjusting the control force is attached directly to the caliper. This is advantageous in that the reaction force will be proportional to the braking torque and not to the actual clamp force since the means also constitute a transmission line for a part of the clamp force.

The means for adjusting the control force might include at least one actuator element being connected to the pressure element. Adjusting of the control force can then be simply attained in that the position of the at least one actuator element is adjustable relative to the brake disc. Another alternative would be to control the current of the motor which drives the actuator element, upon engagement of the brake pad with the brake disc.

In another preferred embodiment of the disc brake according to the invention, the support element is supported against the caliper in an unengaged manner, which means that the support element is either arranged in a way so as to be moveable relative to the caliper or in a way so as to allow at least some elastic deformations of the support element which are able to be measured in some way.

Specifically, the pressure element is configured as a ramp plate, the support element is configured as at least one ramp bridge and the at least one bearing element, with which the ramp plate is supported against the ramp bridge, is configured as a roller. The roller is moveable in ramps defined by surfaces which are facing each other of the ramp plate and the ramp bridge.

More than one roller can be employed which accordingly can be received in one or more than one recess as defined by the surfaces. Also, more than one ramp bridge can be used. In one preferred embodiment of the disc brake according to the invention, it is, for instance, convenient to use at least two of such ramp bridges, which are independent from each other and which are arranged on opposite sides of the means for adjusting the control force and of the actuation mechanism.

According to the invention, the at least one ramp bridge is being supported against the caliper by means of at least two bearings or supports which are spaced apart, preferably on both lateral ends of such ramp bridge. Any well-known kind of bearings can be employed as long as the bearings allow a support of the ramp bridge against the caliper in an unengaged manner as described above.

One preferred way to determine the contact forces of the roller in the ramp surface of the ramp bridge according to the invention would be to provide means for determining, e.g. by evaluating or sensing, the force characteristics in the bearings of the ramp bridge vis-à-vis the caliper.

These force characteristics in turn can be determined in one embodiment of the invention by means which itself are able to determine the bending torque, which is induced into the ramp bridge as a result of the reaction force and thereby of the contact forces of the roller upon brake engagement.

Alternatively, means could be provided which allow the determination of the elastic deflection of the ramp bridge which again results from the reaction force and thereby of the contact forces of the roller upon brake engagement.

In addition, the actual position of the roller on the ramp of the ramp bridge could be determined by suitable means. When the brake pad engages with the brake disc, the ramp plate is tangentially moved with the brake disc and due to the specific design of the self-energizing mechanism moved towards or away from the brake disc. This will lead to lateral and axial displacements of the roller in the ramp surfaces due to the equilibrium of forces and torques which has to be present in the specific configuration of the roller-ramp mechanism according to the invention.

In a preferred way according to the invention, such means for determining the position of the roller can then be easily achieved by employing means which determine the angular position of the actuator element.

The position as determined, i.e. the displacement of the roller from the center of the ramp bridge between the two spaced-apart bearings of the ramp bridge, can be considered in the calculation of the contact forces of the roller and subsequently in the determination of the friction force.

All this kind of means as described above could embody gauges, pressure sensors, load cells or any other suitable kind of sensors as known, which will be arranged on suitable positions within the system.

In a preferred embodiment according to the invention, such gauges, pressure sensors or load cells could be arranged in the center of the ramp bridge between the two-spaced apart bearings and between the ramp bridge and the caliper.

Moreover, the invention refers to a method for determining the friction force on a brake disc of a disc brake with self-servo effect which comprises the above-mentioned features in one way or the other.

The method comprises the step of determining the contact forces both in axial and tangential direction of the at least one bearing element in the support element and in another step determining the friction force, which is present at the brake disc of such self-servo brakes, from said determined contact forces.

These steps will be performed continuously so as to provide a feedback control. From the friction force it is easy to determine the actual braking torque. Once knowing these parameters, the feedback system can be controlled in such a way so that the control force to be applied by the actuation mechanism and acting on the brake disc can be continuously and adaptively adjusted in dependence of the actual braking conditions.

The step of determining the contact forces can include the step of determining the bending torque which is induced in the support element by the presence of the contact forces and/or the step of determining the deflection which is also induced in the support element by the presence of these contact forces of the at least one bearing element.

As an additional parameter, the position of the bearing element in the support element could be included in the determination algorithms, so that the method according to the invention might include further the step of determining the position of the bearing element in the support element.

In a preferred embodiment of the method, this step comprises determining the angular position of the means for adjusting the control force and calculating the position of the bearing element from it.

It becomes apparent from the above description of the disc brake and the method according to the invention, that a friction force determination for a self-energized disc brake is provided which is simple and reliable due to the lack of disturbances which otherwise would require laborious and expensive filtering algorithms.

The invention will be described in further detail below under reference of the accompanying drawings, in which

Fig. 1    is a schematic top view in cross section of a preferred embodiment of a disc brake according to the invention;
Fig. 2    is a schematic view of the equilibrium of forces present a ramp bridge of the disc brake according to the invention;
Fig. 3    is a schematic view of a sensing system at a ramp bridge according to one embodiment of the invention;
Fig. 4    is a schematic view of a sensing system at a ramp bridge according to another embodiment of the invention;
Fig. 5    is a schematic view of a sensing system at a ramp bridge according to another embodiment of the invention;
Fig. 6    is a schematic view of a sensing system at a ramp bridge according to another embodiment of the invention, and
Fig. 7    is a schematic view in cross section of another embodiment of a disc brake according to the invention with one ramp bridge.

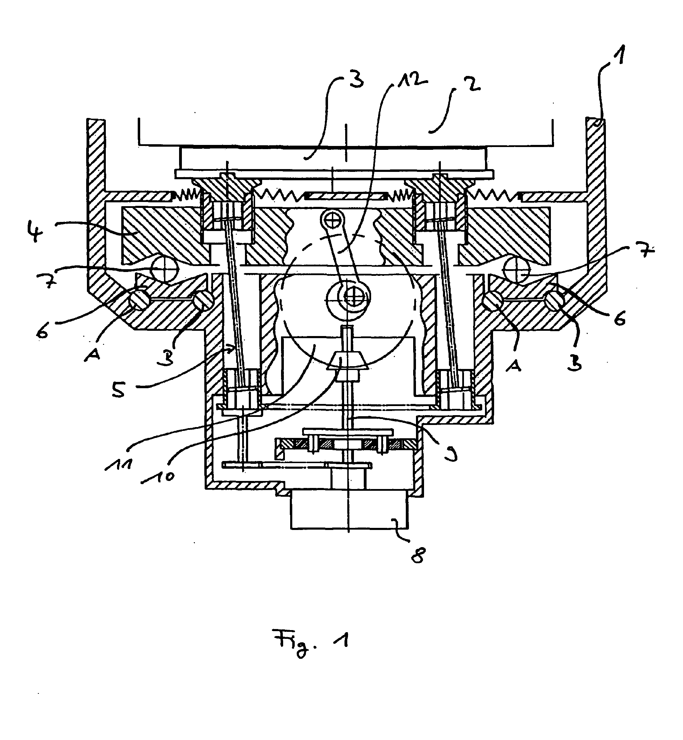

In a vehicle chassis, a disc brake with self-servo effect as shown in Fig. 1, comprises a caliper 1 which is placed astraddle of a rotatable brake disc 2. A brake pad 3 engages with the brake disc 2 during braking.

The brake pad 3 is directly connected to a ramp plate 4 by means of two adjustment mechanisms 5. The adjustment principle to compensate the wear is irrelevant for the invention here and shall not be explained in more detail.

The ramp plate 4 is movably supported against two ramp bridges 6 by means of rollers 7, respectively.

An electric motor 8 can drive a motor shaft 9 in either direction. A bevel gear 10 arranged on the motor shaft 9 is in driving gear engagement with a bevel gear disc 11 which is rotationally supported by the housing of the caliper 1. Eccentrically connected to the bevel gear disc 11 is a crank rod 12 which in turn is pivotally connected to the ramp plate 4.

By turning the bevel gear disc 11 in either direction by means of the bevel gear 10 from the motor 8, the position of the ramp plate 4 in relation to the ramp bridges 6 can be set. When a friction engagement between the brake pad 3 and the brake disc 2 has been established, an application force amplification will be accomplished by the rollers 7 in that they climb the wedge-like surfaces or ramps 13 between the ramp plate 4 and the ramp bridge 6 in response to a tangential movement of the ramp plate 4 caused by the friction engagement with the brake disc 2. This self-servo effect is effective in both rotational directions.

The control force with which the brake application is achieved can be adjusted simply by accurately controlling the rotation of the motor 8 in either direction and thereby the position of the crank rod 12.

Such a control is generally available due to the following principle. Once a braking engagement contact between the brake pad and the brake disc is established, the rotation of the motor 8 is linked to the total deflection of the caliper 1, brake pads 3 and any other components in the chain for the clamp force. It means that the position of the motor 8 via the crank rod 12 and the bevel gear disc 11 in fact controls the total clamp force as long as the elasticity and the thermal expansion do not change substantially and that the control force is a consequence of the equilibrium of forces in the entire system including also the coefficient of friction in the brake pad to brake disc interaction.

The ramp bridges 6 each are supported against the housing of the caliper 1 by means of two bearings A and B in such a manner that deflections, displacements or deformations of the ramp bridges 6 relative to the caliper 1 can be sensed.

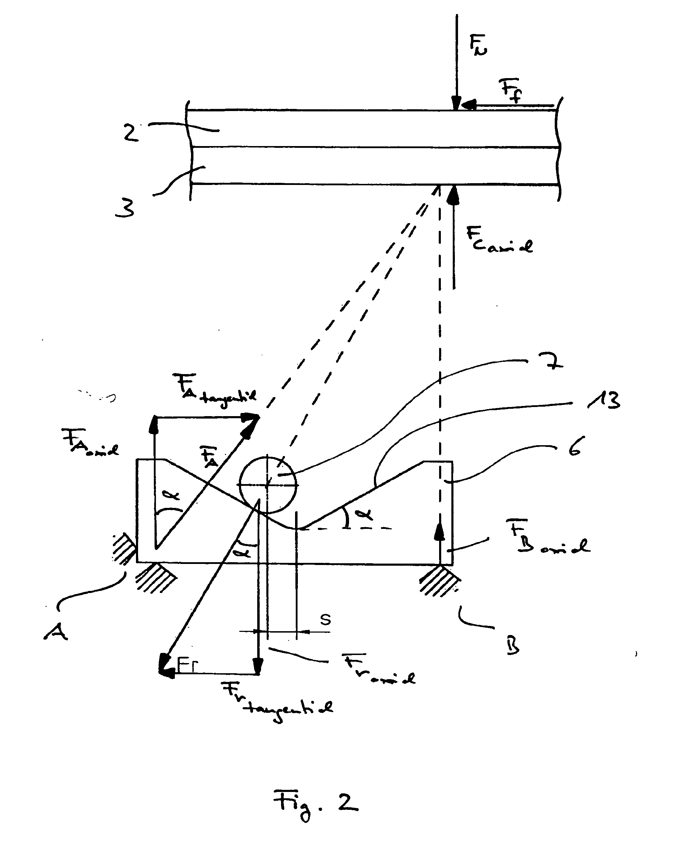

In Fig. 2 exemplarily the equilibrium of forces at one ramp bridge 6, in the present case the ramp bridge 6 on the left side of the actuation mechanism as shown in Fig. 1, is illustrated.

The frictional engagement of the brake pad 3 and the brake disc 2 results in a normal force $F_N$ being perpendicular to the brake disc 2. Accordingly, the friction force $F_f$ is determined by the formula of

$$F_f = F_N * \mu \quad (1)$$

with $\mu$ being the coefficient of friction which is varying due to several parameters, such as temperature of the brake disc 2 and conditions of the friction lining.

As a consequence of the brake engagement, a reaction force $F_r$ acts through the roller 7 into the ramp bridge 6. The reaction force $F_r$ has to be divided in a tangential component $F_{rtangential}$ and an axial component $F_{raxial}$.

Responsive to the reaction force $F_r$, counter forces are generated in the bearings A and B, which resemble the contact forces of the roller 7, namely force $F_A$ in the bearing A and force $F_B$ in the bearing B, both divided in their tangential components and axial components:

$$F_{raxial} = F_{Aaxial} + F_{Baxial} \qquad (2)$$

$$F_{rtangential} = F_{Atangential} + F_{Btangential} \quad (3)$$

When the roller 7 is contacting the ramp surface on a side of the ramp bridge 6 of bearing A, the tangential component in the other bearing B accordingly equals zero so that only an axial component of the force in bearing B does exist. Thus, in the present case, the bearing B only comprises an axial component $F_{Baxial}$, since $F_{Btangential} = 0$.

Via the crank rod 12, the control force $F_C$ is introduced into the ramp plate 3. Due to the specific design of the self-energizing arrangement with the crank rod 12, it is reasonable to assume that in all actuation conditions the tangential component of the control force $F_{Ctangential}$ can be ignored, since both the control force is relatively small and the angle with which the crank rod 12 is directed towards the brake disc 2 is very small, so that the control force as such is directed substantially transverse to the brake disc 2.

Accordingly, the normal force $F_N$ is balanced by the sum of the axial components of the roller contact forces in the bearings and the axial component of the control force $F_{Caxial}$:

$$F_N = F_{Aaxial} + F_{Baxial} + F_{Caxial} \qquad (4)$$

The angle $\alpha$ is defined by the given inclination of the wedge-like ramp surfaces 13. Thus, when the roller 7 is moving up or down the ramp surfaces 13, the magnitude of the reaction force $F_r$ is changing accordingly resulting in different magnitudes of the counter forces $F_A$ and $F_B$ in the bearings A and B, respectively, but the direction of the reaction force $F_r$ remains at all times.

Finally, under the assumption that the tangential component of the control force is ignorable, the friction force $F_f$ on the brake disc has to be balanced by the tangential component of the reaction force $F_{rtangential}$ which in turn equals the tangential component of the counter force $F_{Atangential}$:

$$F_f = F_{rtangential} = F_{Atangential} \qquad (5)$$

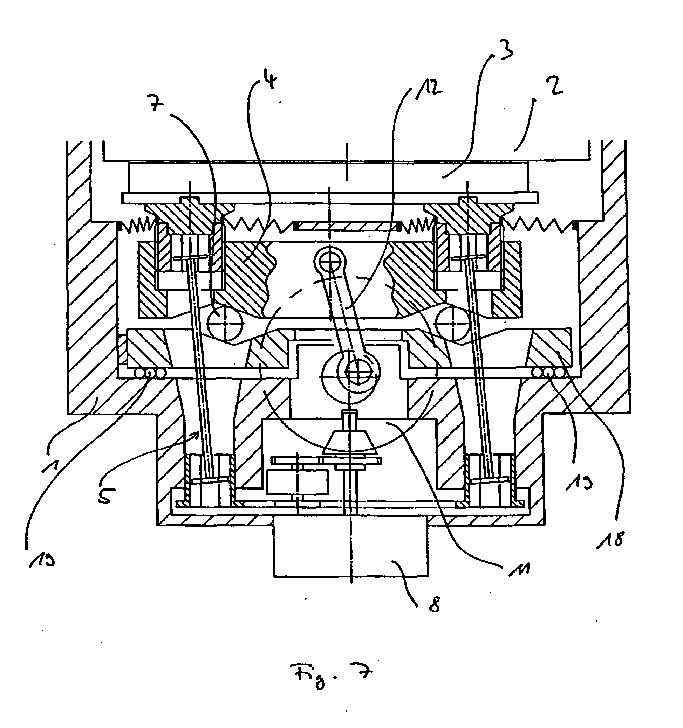

If in the self-energizing arrangement a number of n rollers 6 are employed, as this is exemplarily illustrated in the embodiment according to Fig. 7, the friction force is determined then by the sum of the forces, accordingly:

$$F_f = \sum_n {}^* F_{rtangential} = \sum_n {}^* F_{Atangential} \qquad (6)$$

It becomes apparent that it is only necessary to determine the tangential components of the forces in the bearings A and B in order to arrive at the friction force $F_f$. Knowing the latter, the braking torque can be easily determined since the mean friction radius of the brake disc 2 is known.

Moreover, in this connection it can be assumed that the friction forces on all pads 3 at both sides of the brake disc 2 are equal.

Thus, by the arrangement according to the invention the friction force $F_f$ can be determined without having to consider the variations in the coefficient of friction $\mu$.

The use of bearings A and B with which the ramp bridge 6 is supported against the caliper 1 allows an easy assembly of a force sensing system, which is very reliable since the contact forces of the rollers 7, i.e. the forces in the bearings A and B, are not subjected to major disturbances.

According to the invention, it is sufficient to measure the forces in the bearings A and B, which can be achieved by several ways, as will be explained below in further detail.

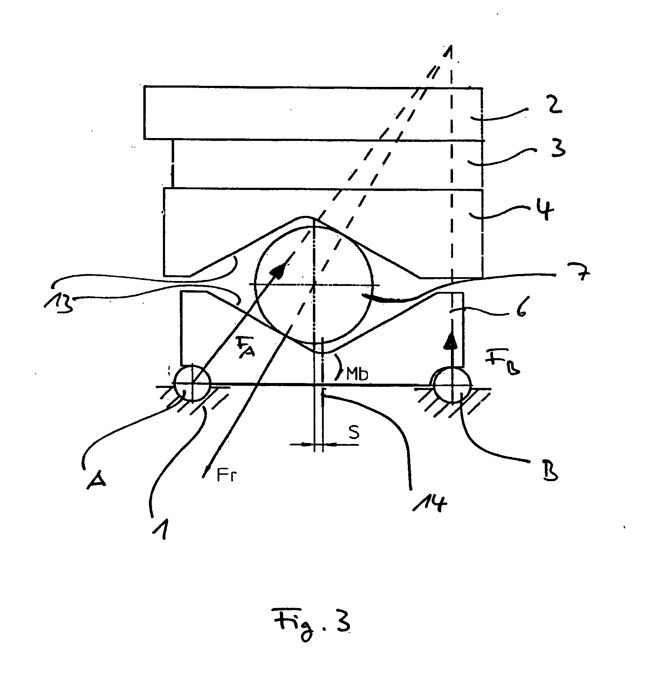

In one embodiment according to the invention, the tangential components of the forces in the bearings A and B can be determined in that the bending moment $M_b$ of the ramp bridge 6 is determined by, for instance, a strain gauge 14 arranged in the center of the ramp bridge 6, as this is exemplarily shown Fig. 3.

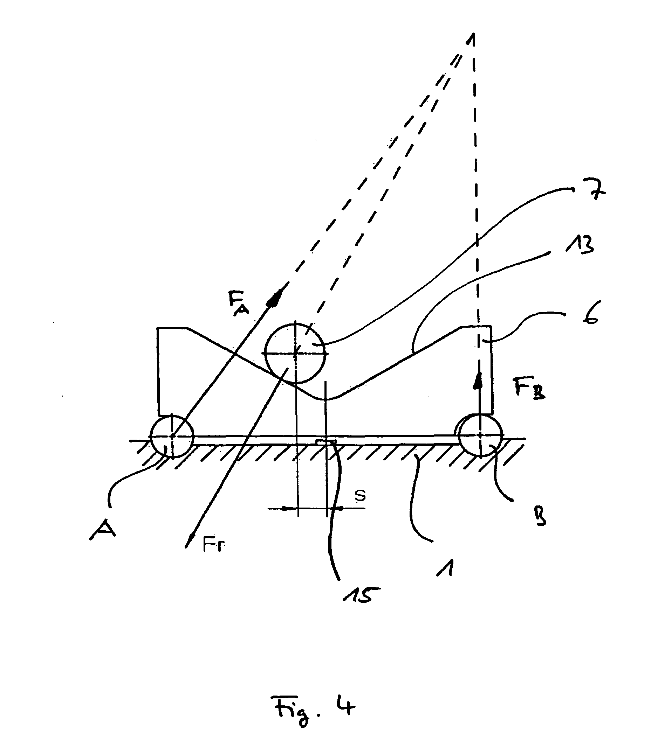

Alternatively, in another embodiment as shown in Fig. 4, the deflection of the ramp bridge 6 resulting from the load of the roller 7 can be sensed by a gauge 15 which is arranged underneath the ramp bridge 6 between the latter and the caliper 1.

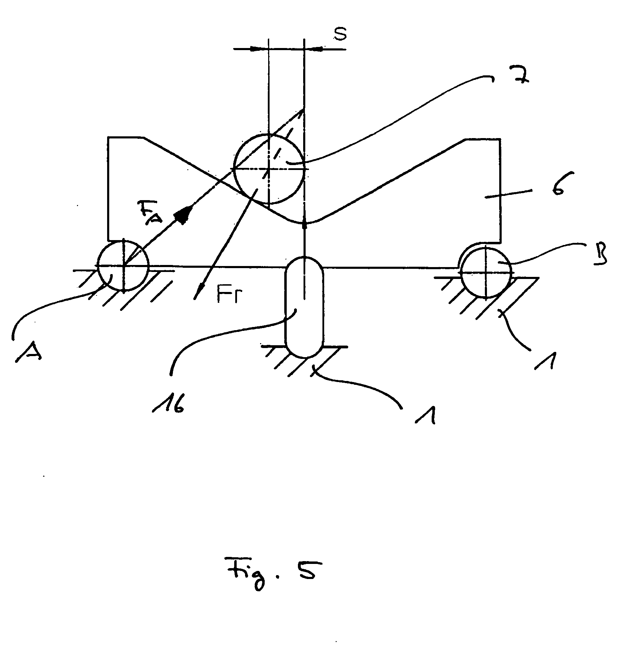

Fig. 5 illustrates another embodiment of the invention which uses a load cell 16. The load cell 16 is arranged between the caliper 1 and the ramp bridge 6 in contact with both elements.

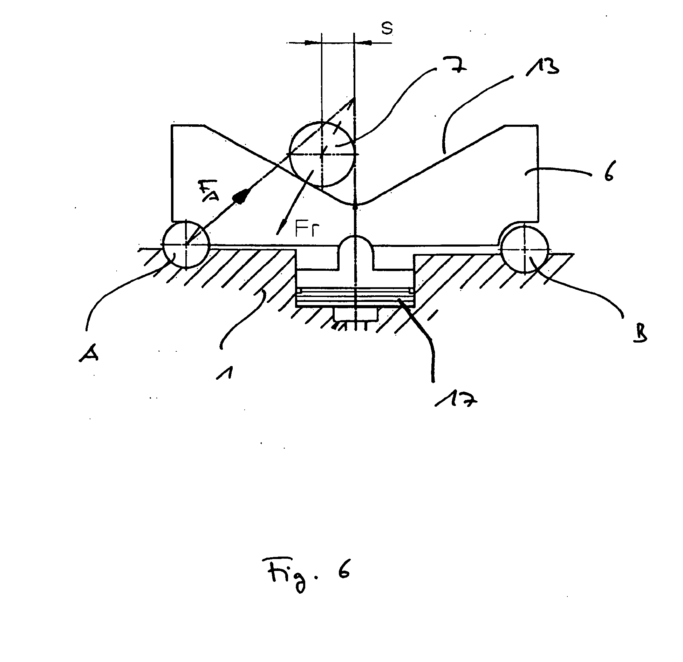

An alternative thereto is shown in Fig. 6, in which a pressure sensor 17 embedding a pressure medium is used instead of the load cell 16 of Fig. 5.

In both cases either bearing A or bearing B is loaded depending on the contact side of the roller 7 with the ramps of the ramp bridge 6 which results from the different rotational directions of the brake disc 2. The forces in the bearings A and B can be determined by relative small differences of the load as detected either by the load cell 16 or the pressure sensor 17 versus the bearings A and B.

In addition, according to a preferred embodiment of the invention, in all applications as described above, the position of the roller 7 resulting from the lateral displacement s of the center of the roller 7 relative to the center or middle of the ramp bridge 6 can be sensed by suitable means and included in the determination of the tangential forces in the bearings A and B.

Due to the roller-ramp arrangement in the disc brake according to the invention as shown in Fig. 1 and the equilibrium of forces and torques as present in the system, such lateral displacement s can be mathematically linked to the angular position of the bevel gear disc 11. By sensing the angular position of the bevel gear disc 11 versus the brake disc 2, the position, i.e. displacement s of the roller 7 on the ramp bridge 6 can be easily determined.

In Fig. 7 another embodiment of the disc brake according to the invention is shown. The support for the ramp plate 4 is formed by one single ramp bridge 18. The ramp bridge 18 is supported against the caliper on both sides of the actuation mechanism by three rollers 19, respectively. Accordingly, the sum of contact forces of the rollers 19 has to be considered when determining the friction force, as this is defined by equation (6).

### Claims

1. Disc brake with self-servo effect with a caliper (1) overlapping a brake disc (2), comprising:

   - a pressure element (4) provided with a brake pad (3) for engagement with the brake disc (2),
   - a support element (6;18),
   - at least one bearing element (7), by means of which the pressure element (4) is supported against the support element (6;18),
   - means (8,9,10,11,12) for adjusting a control force acting on the pressure element (4) substantially transverse to the brake disc (2),
   - the arrangement being such that a movement of the pressure element (4) in the tangential direction of the brake disc (2) will cause it to move towards or away from the brake disc (2),

   **characterized by**
   means for determining the contact forces both in axial and tangential direction of the at least one bearing element (7) in the support element (6;18) and
   means for determining the friction force at the brake disc from said determined contact forces.

2. Disc brake according to claim 1, further comprising means for forming a feedback control system for controlling the braking torque.

3. Disc brake according to claim 1 or 2, in which the support element (6;18) is supported against the caliper (1) in an unengaged manner.

4. Disc brake according to claim 1,2 or 3, in which the means for determining the contact forces include means for determining the bending torque of the support element (6;18).

5. Disc brake according to one of the preceding claims, in which the means for determining the contact forces include means for determining the deflection of

6. Disc brake according to one of the preceding claims, in which the means for determining the contact forces include means for determining the position of the at least one bearing element (7).

7. Disc brake according to one of the preceding claims, in which the means (8,9,10,11,12) for adjusting the control force is attached to the caliper (1).

8. Disc brake according to one of the preceding claims, in which the means (8,9,10,11,12) for adjusting the control force include at least one actuator element (11,12) in connection with the pressure element (4), the position of which is adjustable vis-A-vis the brake disc (2) so as to adjust the control force.

9. Disc brake according to claim 8, in which the means for determining the position of the at least one bearing element (7) include means for determining the angular position of the actuator element (11).

10. Disc brake according to one of the preceding claims, in which the means include gauges (14,15), pressure sensors (16) or load cells (17).

11. Disc brake according to one of the preceding claims, in which said pressure element is a ramp plate (4), said support element is at least one ramp bridge (6;18) and said at least one bearing element is a roller (7), wherein the roller (7) is moveable in ramps (13) in surfaces facing each other of the ramp plate (4) and the ramp bridge (6;18), the ramp bridge (6;18) being supported against the caliper (1) by means of at least two spaced-apart bearings (A,B;19).

12. Disc brake according to claim 11, in which a pressure sensor (16) or a load cell (17) is arranged between the ramp bridge (6) and the caliper (1) in the center of the ramp bridge (6) between the two spaced-apart bearings (A,B).

13. Method for determining the friction force on a brake disc (2) of a disc brake with self-servo effect, the disc brake comprising

  - a pressure element (4) provided with a brake pad (3) for engagement with the brake disc (2),
  - a support element (6;18),
  - at least one bearing element (7), by means of which the pressure element (4) is supported against the support element (6;18),
  - means (8,9,10,11,12) for adjusting a control force acting on the pressure element (4) substantially transverse to the brake disc (2),
  - the arrangement being such that a movement of the pressure element (4) in the tangential direction of the brake disc (2) will cause it to move towards or away from the brake disc (2),

  the method comprising the steps of

  - determining the contact forces both in axial and tangential direction of the at least one bearing element (7) in the support element (6;18); and
  - determining the friction force at the brake disc (2) from said determined contact forces.

14. Method according to claim 13, further comprising the step of controlling the braking torque in dependency from the determined friction force.

15. Method according to claim 13 or 14, further comprising the step of determining the bending torque induced into the support element (6;18).

16. Method according to claim 13, 14 or 15, further comprising the step of determining the deflection induced into the support element (6;18).

17. Method according to one of claims 13 - 16, further comprising the step of determining the position of the bearing element (7) in the support element (6;18).

18. Method according to claim 17, in which the step of determining the position of the bearing element (7) comprises the step of determining the angular position of the means (11,12) for adjusting the control force.

**Patentansprüche**

1. Scheibenbremse mit einem Selbstverstärkungseffekt mit einem Sattel (1), der eine Bremsscheibe (2) übergreift, aufweisend:

   - ein Druckelement (4), das mit einem Bremsbelag (3) für einen Eingriff mit der Bremsscheibe (2) versehen ist,
   - ein Widerlagerelement (6; 18),
   - zumindest ein Lagerelement (7), mittels welchem das Druckelement (4) gegenüber dem Widerlagerelement (6; 18) abgestützt ist,
   - Mittel (8, 9, 10, 11, 12) zum Einstellen einer Steuerkraft, die auf das Druckelement (4) im Wesentlichen quer zu der Bremsscheibe (2) wirkt,
   - wobei die Anordnung derart ist, dass eine Bewegung des Druckelements (4) in der Tangentialrichtung der Bremsscheibe (2) bewirkt, dass dieses sich auf die Bremsscheibe (2) zu oder von dieser weg bewegt,

   **gekennzeichnet durch** Mittel zur Bestimmung der Kontaktkräfte sowohl in Axialals auch in Tangentialrichtung des zumindest einen Lagerelements (7) in dem Widedagerelement (6; 18) und Mittel zur Bestimmung einer Reibungskraft an der Bremsscheibe aus diesen bestimmten Kontaktkräften.

2. Scheibenbremse nach Anspruch 1, weiter aufweisend Mittel zur Ausbildung eines Feedback-Steuersystems zur Steuerung des Bremsmoments.

3. Scheibenbremse nach Anspruch 1 oder 2, bei welcher das Widerlagerelement (6; 18) gegenüber dem Sattel (1) in einer frei beweglichen Art und Weise gelagert ist.

4. Scheibenbremse nach Anspruch 1, 2 oder 3, bei welcher die Mittel zur Bestimmung der Kontaktkräfte Mittel zur Bestimmung des Biegemoments des Widerlagerelements (6; 18) beinhalten.

5. Scheibenbremse nach einem der vorhergehenden Ansprüche, bei welcher die Mittel zur Bestimmung der Kontaktkräfte Mittel zur Bestimmung der Durchbiegung des Widerlagerelements (6; 18) beinhalten.

6. Scheibenbremse nach einem der vorhergehenden Ansprüche, bei welcher die Mittel zur Bestimmung der Kontaktkräfte Mittel zur Bestimmung der Position von zumindest einem Lagerelement (7) beinhalten.

7. Scheibenbremse nach einem der vorhergehenden Ansprüche, bei welcher das Mittel (8, 9, 10, 11, 12) zur Einstellung der Steuerkraft an dem Sattel (1) angebracht ist.

8. Scheibenbremse nach einem der vorhergehenden Ansprüche, bei welcher die Mittel (8, 9, 10, 11, 12) zur Einstellung der Steuerkraft zumindest ein Aktuatorelement (11, 12) in Verbindung mit dem Druckelement (4) beinhalten, wobei die Position des Druckelements (4) gegenüber der Bremsscheibe (2) so einstellbar ist, dass die Steuerkraft eingestellt werden kann.

9. Scheibenbremse nach Anspruch 8, bei welcher die Mittel zur Bestimmung der Position des zumindest einen Lagerelements (7) Mittel zur Bestimmung der Winkelposition des Aktuatorelements (11) beinhalten.

10. Scheibenbremse nach einem der vorhergehenden Ansprüche, bei welcher die Mittel Messinstrumente (14, 15), Drucksensoren (16) oder Wägezellen (17) umfassen.

11. Scheibenbremse nach einem der vorhergehenden Ansprüche, bei welcher das Druckelement eine Rampenplatte (4) ist, das Widerlagerelement zumindest eine Rampenbrücke (6; 18) ist und das zumindest eine Lagerelement ein Wälzkörper (7) ist, wobei der Wälzkörper (7) in Rampen (13) in Oberflächen der Rampenplatte (4) und der Rampenbrücke (6; 18), die sich einander gegenüber liegen, beweglich sind, wobei die Rampenbrücke (6; 18) gegenüber dem Sattel (1) mittels zumindest zwei voneinander beabstandeten Lager (A, B; 10) gelagert ist.

12. Scheibenbremse nach Anspruch 11, bei welcher ein Drucksensor (16) oder eine Wägezelle (17) zwischen der Rampenbrücke (6) und dem Sattel (1) in der Mitte der Rampenbrücke (6) zwischen den beiden voneinander beabstandeten Lagern (A, B) angeordnet ist.

13. Verfahren zur Bestimmung der Reibungskraft an einer Bremsscheibe (2) einer Scheibenbremse mit einem Selbstverstärkungseffekt, wobei die Scheibenbremse aufweist

- ein Druckelement (4), das mit einem Bremsbelag (3) für einen Eingriff mit der Bremsscheibe (2) versehen ist,
- ein Widerlagerelement (6; 18),
- zumindest ein Lagerelement (7), mittels welchem das Druckelement (4) gegenüber dem Widerlager (6; 18) abgestützt ist,
- Mittel (8, 9, 10, 11, 12) zur Einstellung einer Steuerkraft, die auf das Druckelement (4) im Wesentlichen quer zu der Bremsscheibe (2) wirkt,

wobei die Anordnung derart ist, dass eine Bewegung des Druckelements (4) in der Tangentialrichtung der Bremsscheibe (2) bewirkt, dass sich dieses auf die Bremsscheibe (2) zu und von dieser weg bewegt,
wobei das Verfahren die Schritte aufweist

- Bestimmen der Kontaktkräfte sowohl in Axial- als auch in Tangentialrichtung von zumindest einem Lagerelement (7) in dem Widerlagerelement (6; 18); und
- Bestimmen der Reibungskraft an der Bremsscheibe (2) aus diesen bestimmten Kontaktkräften.

14. Verfahren nach Anspruch 13, weiter aufweisend den Schritt des Steuerns des Bremsmoments in Abhängigkeit der bestimmten Reibungskraft.

15. Verfahren nach Anspruch 13 oder 14, weiter aufweisend den Schritt des Bestimmens des Biegemoments, das in das Widerlagerelement (6; 18) eingeleitet wird.

16. Verfahren nach Anspruch 13, 14 oder 15, weiter aufweisend den Schritt des Bestimmens der Durchbiegung, die in das Widerlager (6; 18) eingeleitet wird.

17. Verfahren nach einem der Ansprüche 13 bis 16, weiter aufweisend den Schritt des Bestimmens der Position des Lagerelements (7) in dem Widerlagerelement (6; 18).

18. Verfahren nach Anspruch 17, bei welchem der Schritt des Bestimmens der Position des Lagerelements (7) den Schritt des Bestimmens der Winkelposition der Mittel (11, 12) zur Einstellung der Steuerkraft aufweist.

**Revendications**

1. Frein à disque à effet auto-serreur et étrier (1) chevauchant un disque de frein (2), comportant :

- un organe de pression (4) équipé d'une plaquette de frein (3) destinée à être appuyée sur le disque de frein (2),
- un élément support (6 ; 18),
- au moins un palier (7) au moyen duquel l'organe de pression (4) est porté par l'élément support (6 ; 18),
- des moyens (8, 9, 10, 11, 12) de réglage de la force contrôlant l'organe de pression (4) et agissant principalement transversalement par rapport au disque de frein (2).
- le montage étant tel qu'un mouvement de l'organe de pression (4) dans une direction tangentielle par rapport au disque de frein (2) le fera se rapprocher ou s'éloigner du disque de frein (2),

et **caractérisé par**
des moyens de déterminer les forces de contact tant axiales que tangentielles du ou des paliers (7) dans l'élément support (6 ; 18) et
des moyens de déterminer la force de friction sur le disque de frein due aux forces de contact précitées.

2. Frein à disque conforme à la déclaration 1, comprenant en outre des moyens d'établir un système de rétroaction commandant le couple de freinage.

3. Frein à disque conforme aux déclarations 1 ou 2, pour lequel l'élément support (6 ; 18) s'appuie contre l'étrier (1) d'une manière libre.

**4.** Frein à disque conforme aux déclarations 1, 2 ou 3, pour lequel les moyens pour déterminer les forces de contact comprennent des moyens pour déterminer le couple de flexion de l'élément support (6 ; 18).

**5.** Frein à disque conforme à l'une des déclarations précédentes, pour lequel les moyens de détermination des forces de contact comprennent des moyens de déterminer la flèche de l'élément support (6 ; 18).

**6.** Frein à disque conforme à l'une des déclarations précédentes, pour lequel les moyens de détermination des forces de contact comprennent des moyens de déterminer la position du ou des paliers (7).

**7.** Frein à disque conforme à l'une des déclarations précédentes, pour lequel les moyens (8, 9, 10, 11, 12) de réglage de la force de contrôle sont fixés sur l'étrier (1).

**8.** Frein à disque conforme à l'une des déclarations précédentes, pour lequel les moyens (8, 9, 10, 11, 12) de réglage de la force de contrôle comprennent au moins un actionneur (11, 12) relié à l'organe de pression (4), la position de ce dernier étant réglable par rapport au disque de frein (2) de manière à ajuster la force de contrôle.

**9.** Frein à disque conforme à la déclaration 8, pour lequel les moyens de déterminer la position du ou des paliers (7) comprennent des moyens de déterminer la position angulaire de l'actionneur (11).

**10.** Frein à disque conforme à l'une des déclarations précédentes, pour lequel les moyens incluent des jauges (14, 15) des capteurs de pression (16) ou des dynamomètres (17).

**11.** Frein à disque conforme à l'une des déclarations précédentes, pour lequel l'organe de pression précité est une plaque à plans inclinés (4), l'élément support étant constitué d'au moins un pont à plans inclinés (6, 18) et le ou les paliers précités étant constitué d'un rouleau (7), ce dernier se déplaçant sur des plans inclinés (13) sur des surfaces de la plaque à plans inclinés (4) et du pont à plans inclinés (6, 18) se faisant face, le pont à plans inclinés (6, 18) étant appuyé contre l'étrier (1) au moyen d'au moins paliers écartés l'un de l'autre (A, B, 19).

**12.** Frein à disque conforme à la déclaration 8, pour lequel un capteur de pression (16) ou un dynamomètre (17) est disposé entre le pont à plans inclinés (6) et l'étrier (1) au centre du pont à plans inclinés (6) entre les deux paliers écartés (A, B).

**13.** Méthode de détermination de la force de friction sur le disque (2) d'un frein à disque à effet auto-serreur, ce dernier comprenant :

- un organe de pression (4) équipé d'une plaquette de frein (3) destinée à être appuyée sur le disque de frein (2),
- un élément support (6 ; 18),
- au moins un palier (7) au moyen duquel l'organe de pression (4) est porté par l'élément support (6 ; 18),
- des moyens (8, 9, 10, 11, 12) de réglage de la force contrôlant l'organe de pression (4) et agissant principalement transversalement par rapport au disque de frein (2).
- le montage étant tel qu'un mouvement de l'organe de pression (4) dans une direction tangentielle par rapport au disque de frein (2) le fera se rapprocher ou s'éloigner du disque de frein (2),

la méthode comprenant successivement

- la détermination des forces de contact tant axiales que tangentielles du ou des paliers (7) dans l'élément support (6 ; 18) et
- la détermination de la force de friction sur le disque de frein, due aux forces de contact précitées.

**14.** Méthode conforme à la déclaration 13, comprenant en outre une étape de contrôle du couple de freinage en fonction de la force de friction déterminée.

**15.** Méthode conforme aux déclarations 13 et 14, comprenant en outre une étape de détermination du couple de flexion créé dans l'élément support (6, 18).

**16.** Méthode conforme aux déclarations 13, 14 et 15, comprenant en outre une étape de détermination de la flèche créée dans l'élément support (6, 18).

17. Méthode conforme à l'une des déclarations 13, 14 et 15, comprenant en outre une étape de détermination de la position du palier (7) dans l'élément support (6, 18).

18. Méthode conforme à la déclaration 17, dans la quelle l'étape de détermination de la position du palier (7) comprend l'étape de détermination de la position angulaire des moyens (11, 12) d'ajustement de la force de contrôle.

Fig. 1

$$\overline{F}ig. \ 2$$

Fig. 3

Fig. 4

Fig. 5

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03071150 A
- DE 10226035 A1
- DE 10056451 A1
- DE 10046177 A1
- DE 10037055 A1
- WO 2005028905 A